(19) Europäisches Patentamt
European Patent Office
Office européen des brevets

(11) **EP 4 249 187 B1**

(12) **EUROPEAN PATENT SPECIFICATION**

(45) Date of publication and mention
of the grant of the patent:
**16.07.2025 Bulletin 2025/29**

(21) Application number: **21910383.5**

(22) Date of filing: **10.12.2021**

(51) International Patent Classification (IPC):
**B25J 9/16** *(2006.01)*        **B25J 13/08** *(2006.01)*

(52) Cooperative Patent Classification (CPC):
**B25J 9/1674;** G05B 2219/39468; G05B 2219/40589

(86) International application number:
**PCT/JP2021/045535**

(87) International publication number:
**WO 2022/138234 (30.06.2022 Gazette 2022/26)**

(54) **TOOL CHECKING DEVICE, TOOL CHECKING PROGRAM, AND TOOL CHECKING METHOD FOR ROBOT ARM**

WERKZEUGÜBERPRÜFUNGSVORRICHTUNG, WERKZEUGÜBERPRÜFUNGSPROGRAMM UND WERKZEUGÜBERPRÜFUNGSVERFAHREN FÜR ROBOTERARM

DISPOSITIF, PROGRAMME ET PROCÉDÉ DE VÉRIFICATION D'OUTIL POUR BRAS DE ROBOT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.12.2020 JP 2020215840**

(43) Date of publication of application:
**27.09.2023 Bulletin 2023/39**

(73) Proprietor: **MAYEKAWA MFG. CO., LTD.**
**Tokyo 135-8482 (JP)**

(72) Inventors:
• **HIRAYAMA, Junta**
**Tokyo 135-8482 (JP)**
• **TOKUMOTO, Masaru**
**Tokyo 135-8482 (JP)**

• **YAMASHITA, Tomoki**
**Tokyo 135-8482 (JP)**
• **KIMURA, Kenichiro**
**Tokyo 135-8482 (JP)**

(74) Representative: **Regimbeau**
**20, rue de Chazelles**
**75847 Paris Cedex 17 (FR)**

(56) References cited:
JP-A- 2010 234 451      JP-A- 2010 234 451
JP-A- 2014 168 823      JP-A- 2014 168 823
JP-A- 2020 110 920      JP-A- 2020 110 920
JP-A- 2020 179 441      JP-A- 2020 179 441
JP-A- H05 318 239       JP-A- H05 318 239
JP-A- H06 134 638       JP-A- H06 134 638
US-A1- 2009 271 036     US-A1- 2016 334 777
US-A1- 2020 117 161

# EP 4 249 187 B1

**Description**

TECHNICAL FIELD

The present disclosure relates to a workpiece processing system comprising a tool checking device, and a method for processing a workpiece with the workpiece processing system

BACKGROUND

Conventionally, a robot arm is known to which a tool is interchangeably attached to perform processing or operation on an object. For example, in the robot arm disclosed in Patent Document 1, one of multiple types of tools is attached to the robot arm depending on processing to be performed on the object. The robot arm can grasp the object by opening and closing the tool.

Citation List

Patent Literature

Patent Document 1: JP2018-158405A

SUMMARY

Problems to be Solved

In order to appropriately perform operations such as processing by the robot arm, tool conditions need to be satisfied, such as the tool attached being of the proper type and in the proper state (e.g., open state or closed state), depending on processing to be performed. In this regard, Patent Document 1 does not disclose a specific configuration for accurately determining whether the tool satisfies the tool conditions. US 2016/0334777 A1 discloses analyzing a tool image for inspecting a selected tool upon execution of a tool change command. US 2020/0117161 A1 discloses a matching recognition for machining steps and the corresponding cutter tools. US 2009/0271036 A1 discloses identifying a tool among a plurality of different kinds of tools, based on a safe signal corresponding to the tool to be identified. JP H05 318239 A discloses identifying a hand attached to a robot device based on the corresponding identification number uniquely set for the hand.

An object of the present disclosure is to provide a workpiece processing system comprising a tool checking device, and a method for processing a workpiece with the workpiece processing system also comprising a robot arm whereby it is possible to accurately determine whether a tool satisfies a tool condition.

Solution to the Problems

According to the present invention, there are provided a workpiece processing system comprising a tool checking device and a method for processing a workpiece with the workpiece processing system as defined in the appended claims.

Advantageous Effects

According to some embodiments, there is provided a workpiece processing system comprising a tool checking device, and a method for processing a workpiece with the workpiece processing system also comprisong a robot arm whereby it is possible to accurately determine whether a tool satisfies a tool condition.

BRIEF DESCRIPTION OF DRAWINGS

FIG. 1 is a diagram of a workpiece processing system according to the first embodiment.
FIG. 2 is a diagram showing reference image data which is data of a reference image for executing image processing according to an embodiment.
FIG. 3A is a diagram for describing a determination method by a determination unit according to the first embodiment.
FIG. 3B is another diagram for describing a determination method by a determination unit according to the first embodiment.

2

FIG. 4 is a block diagram showing an electrical configuration of a workpiece processing system according to an embodiment.

FIG. 5 is a flowchart of a processing control process according to an embodiment.

FIG. 6 is a diagram of a workpiece processing system according to the second embodiment.

FIG. 7 is a diagram showing trained models corresponding to tool conditions according to an embodiment.

FIG. 8 is a diagram showing the process of generating a trained model according to an embodiment.

FIG. 9 is a diagram for describing a determination method by a determination unit according to the second embodiment.

FIG. 10 is a diagram of a workpiece processing system according to the third embodiment.

FIG. 11 is a diagram showing related area data 21 according to an embodiment.

FIG. 12 is a diagram for describing a determination method by a determination unit according to the third embodiment.

DETAILED DESCRIPTION

Embodiments of the present invention will now be described in detail with reference to the accompanying drawings. It is intended, however, that unless particularly identified, dimensions, materials, shapes, relative positions, and the like of components described in the embodiments shall be interpreted as illustrative only and not intended to limit the scope of the present invention.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

A workpiece processing system 1 according to an embodiment will be described. The workpiece processing system 1 according to an embodiment is provided to process a workpiece 5 using a tool 40. The workpiece 5 is an object to be processed by the tool 40. Examples of the workpiece 5 include food products such as agricultural products, livestock products, and marine products. The food product may be a fresh food product or processed food product. The following describes the first, second and third embodiments in which the workpiece 5 is fresh meat.

(First embodiment)

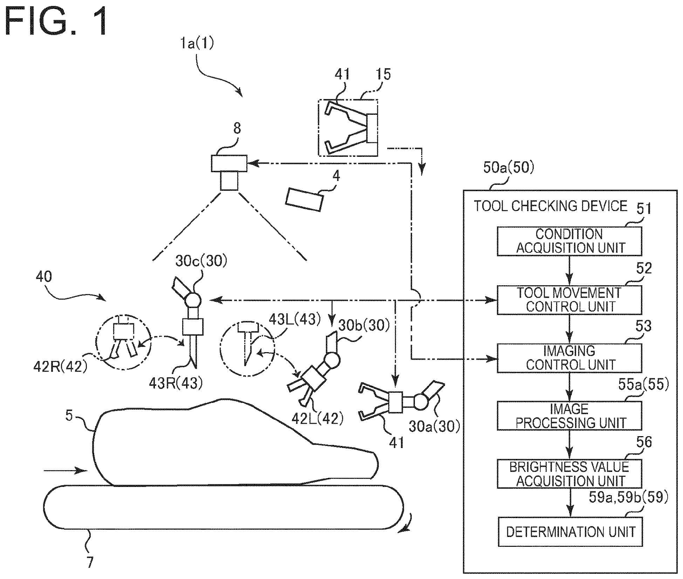

A workpiece processing system 1a (1) according to the first embodiment illustrated in FIG. 1 includes a conveyance device 7 for conveying the workpiece 5, a robot arm 30 for processing the workpiece 5, an imaging device 8 for capturing an image of the tool 40, an illumination unit 4 for illuminating an area captured by the imaging device 8, and a tool checking device 50a (50) for a robot arm.

The conveyance device 7 according to an embodiment is a belt conveyor for conveying the workpiece 5 in the horizontal direction.

The imaging device 8 according to an embodiment is provided to capture an image of the tool 40 from above. In this embodiment, the captured image 15 of the imaging device 8 is a planar image. FIG. 1 illustrates a captured image 15 of a clamper 41 (described later), which is an example of the tool 40.

In an embodiment, the robot arm 30 is equipped with the tool 40. In an embodiment, the tool checking device 50 checks whether the tool 40 is proper or not using the captured image 15. Details of the configurations of the robot arm 30, the tool 40, and the tool checking device 50a will be described later.

In another embodiment, the conveyance device 7 may grasp and convey the workpiece 5 in a suspended position. The imaging device 8 may be configured to capture an image of the tool 40 along the horizontal direction, or may be configured to capture an image of the tool 40 along a direction inclined with respect to the horizontal direction. Further, the workpiece processing system 1a may not include the illumination unit 4. In this case, the function of the illumination unit 4 may be included in the imaging device 8.

The configuration of the robot arm 30 will be described. The robot arm 30 according to an embodiment is an industrial robot. More specifically, for example, the robot arm 30 is an articulated robot. The robot arm 30 may be a vertical articulated robot, a horizontal articulated robot, or a combination thereof.

The robot arm 30 according to an embodiment includes robot arms 30a, 30b, 30c. In an embodiment, the tool 40 attached to the robot arm 30 is made of a metallic material. Further, the tool 40 according to an embodiment has a surface that reflects light more easily than the workpiece 5, for example.

The tool 40 according to an embodiment includes a clamper 41 for gripping the workpiece 5, a chuck 42 for chucking the workpiece 5, and a knife 43 for cutting the workpiece 5.

In an embodiment, the clamper 41 is attached to the robot arm 30a, and the chuck 42 and the knife 43 are attached to the robot arm 30b or the robot arm 30c.

In an embodiment, left-right symmetrical tools 40 are prepared to be used according to the type of the workpiece 5. As a specific example, the chuck 42 includes chucks 42L and 42R, the knife 43 includes knives 43L and 43R, and these tools 40 are selectively attached to the robot arms 30b and 30c. For example, when the workpiece 5 conveyed by the conveyance device 7 is either a left limb or a right limb of livestock, the chuck 42L and the knife 43R are attached to the robot arms 30b and 30c, respectively. When the workpiece 5 is the other, the knife 43L and the chuck 42R are attached to the robot arms 30b and 30c, respectively. In an embodiment, the attachment work is performed by an operator. In another embodiment, the attachment work may be performed by separate robots.

The clamper 41 and the chuck 42 according to an embodiment obtain driving force from a driving source to perform opening and closing operations. In an embodiment, an air cylinder (not shown) is used as the driving source. In this case, the inlet and outlet provided in each of the clamper 41 and the chuck 42 are connected to the air cylinder via air pipes. A hydraulic cylinder or a motor may be used as the driving source.

In another embodiment, the workpiece processing system 1a may not include the left-right symmetrical tools 40. For example, the chuck 42 may include only one of chucks 42L and 42R. Similarly, the knife 43 may include only one of them. In still another embodiment, each of the robot arms 30 may be equipped with only one tool 40.

Further, the workpiece processing system 1a is not limited to having a plurality of robot arms 30. A single robot arm 30 may be selectively equipped with multiple types of tools 40 or only one tool 40.

The configuration of the tool checking device 50 for a robot arm (hereinafter also referred to as "tool checking device 50") will be described. The tool checking device 50 uses a tool condition regarding the tool type or tool state that needs to be satisfied by the tool 40 as a criterion for checking. In an embodiment, the tool check is performed based on a processed image 18 (described below) obtained by image processing of the captured image 15.

The tool type is the type of the tool 40 that should be attached to the robot arm 30. The tool type according to an embodiment is the clamper 41, the chuck 42, or the knife 43. For example, if the knife 43L is attached to the robot arm 30b even though the chuck 42L should be attached, the tool condition regarding the tool type is not satisfied. Such cases can occur, for example, if the operator inadequately replaces the tool 40.

The tool state is the state that should be met by the tool 40 attached to the robot arm 30. The tool state according to an embodiment includes the open state or closed state of the clamper 41 and the chuck 42, and the normal state of the knife 43. For example, if the tool 40 such as the clamper 41 or the chuck 42 should be in the closed state but is in the open state, the tool condition regarding the tool state is not satisfied. Such cases can occur, for example, if connection between the clamper 41 or the chuck 42 and the air cylinder through the air pipe is inadequate. On the other hand, if the knife 43 is missing even though it should be in the normal state, the tool condition regarding the tool state is not satisfied. Such cases can occur, for example, due to the continuous use of the knife 43.

In an embodiment, the tool types and tool states are managed in associated with each other. Thus, the tool checking device 50 can check whether the type and state are both proper in a single check. As a specific example, the tool checking device 50 may determine in a single check whether the tool condition corresponding to the clamper 41 as the tool type and the open state as the tool state is satisfied. Alternatively, it may determine in a single check whether the tool condition corresponding to the knife 43L as the tool type and the normal state as the tool state is satisfied.

In another embodiment, the tool types and tool states do not have to be associated with each other. For example, the tool checking device 50 may separately determine whether the tool condition regarding the tool type and the tool condition regarding the tool state are satisfied.

In another embodiment, the tool condition may be a condition related only to the tool type. In other words, only whether the type of the tool 40 attached to the robot arm 30 is proper may be determined. Alternatively, the tool condition may be a condition related only to the tool state. For example, in an embodiment where the robot arm 30 is equipped with only one tool 40, only whether the state of the tool 40 is proper is determined.

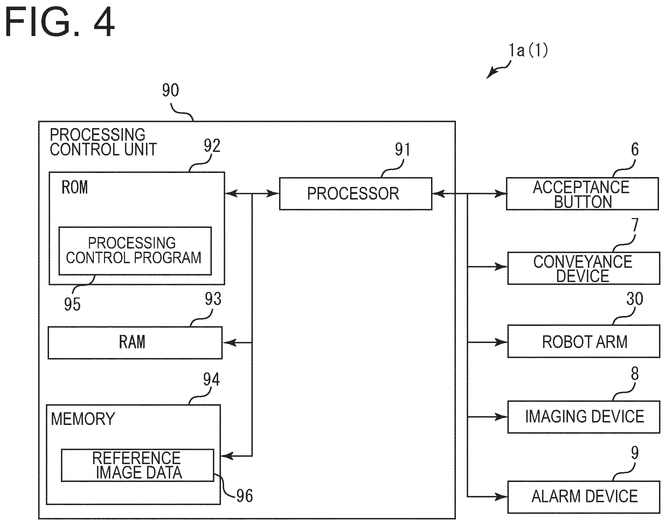

The configuration of the tool checking device 50a (50) will be described. The tool checking device 50a according to an embodiment includes a condition acquisition unit 51, a tool movement control unit 52, an imaging control unit 53, an image processing unit 55a (55), a brightness value acquisition unit 56, and a determination unit 59a, 59b (59). The functions of these components are implemented by a processor 91 (see FIG. 4) as will be described later.

The condition acquisition unit 51 according to an embodiment is configured to acquire a tool condition according to a work schedule (operation schedule) of the robot arm 30 after the tool condition is determined to be satisfied. For example, if work with the clamper 41 in the open state is scheduled as the work after the tool condition is determined to be satisfied, the condition acquisition unit 51 acquires the tool condition where the tool type is the clamper 41 and the tool state is the open state.

The tool movement control unit 52 according to an embodiment is provided to control the robot arm 30 so as to move the tool 40 to a defined position included in the area captured by the imaging device 8. The defined position according to an embodiment may be different for each of the robot arms 30a, 30b, and 30c. Alternatively, the same defined position may be set for all of the robot arms 30a, 30b, and 30c. Alternatively, the defined position may be set according to the tool condition.

The imaging control unit 53 according to an embodiment is provided to control the imaging device 8 so as to capture an image of the tool 40 moved to the defined position.

The image processing unit 55a (55) according to an embodiment is configured to perform, on the captured image 15 of the tool 40 attached to the robot arm 30, image processing associated with the tool condition that needs to be satisfied by the tool 40. In an embodiment, the image processing unit 55a performs, on the captured image 15, image processing associated with the tool condition acquired by the condition acquisition unit 51 among a plurality of the tool conditions prepared in advance.

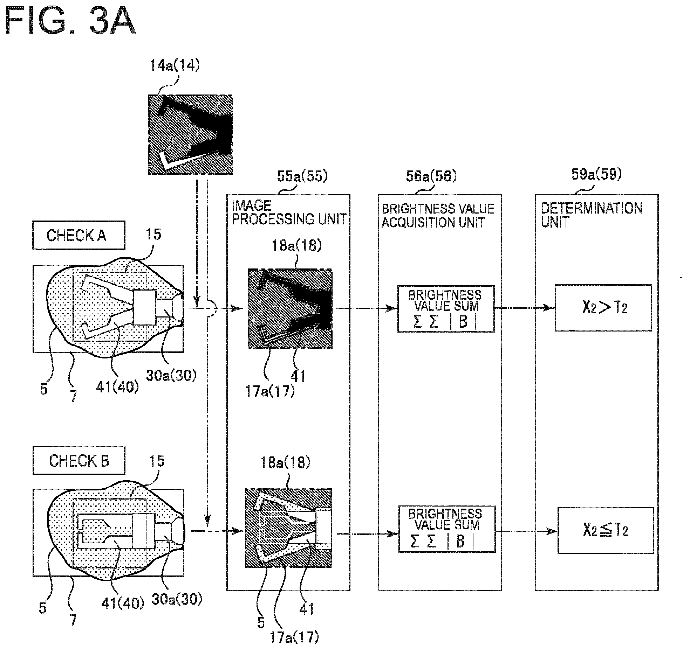

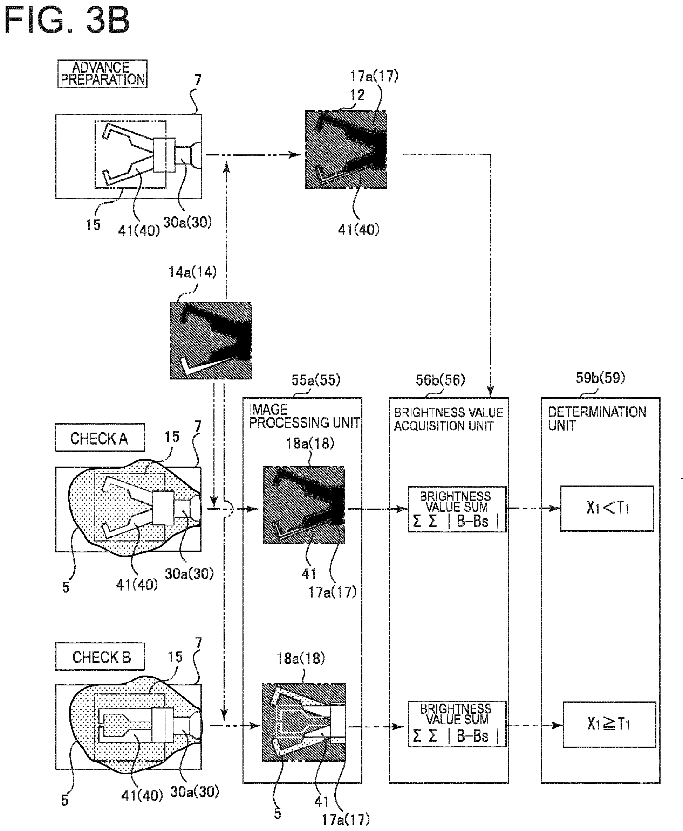

The image processing unit 55a according to an embodiment is configured to perform the image processing and generate a processed image 18a (18) in which a related area 17a (17) is extracted (see FIGs. 3A and 3B). The related area 17a according to an embodiment is an area set such that there is a difference in the image between when the tool condition is satisfied and when it is not satisfied. The processed image 18a obtained by extracting this related area 17a is used to determine whether the tool condition is satisfied.

The related area 17a according to an embodiment is set in association with the tool condition. For example, the related area 17a associated with the tool condition regarding the tool state of the clamper 41 is set to be an area where at least a part of the movable portion of the clamper 41 enters or exits depending on the state of the clamper 41 (open or closed state). The related area 17a may be set at the time of determination by the determination unit 59a or may be set in advance before the determination.

The related area 17a according to an embodiment is an area along at least a part of the contour of the tool 40 that satisfies the tool condition and is an area to be trimmed. In an embodiment, the image processing unit 55a performs masking to extract the related area 17a.

The brightness value acquisition unit 56 according to an embodiment is configured to acquire a brightness value of the processed image 18a (18). In an embodiment, an RGB brightness value of each pixel of the processed image 18a is acquired.

The determination unit 59a, 59b (59) according to an embodiment is configured to determine whether the tool 40 attached to the robot arm 30 satisfies the tool condition on the basis of the processed image 18a (18). In an embodiment, the determination unit 59a, 59b determines whether the tool condition acquired by the condition acquisition unit 51 is satisfied on the basis of the brightness value acquired by the brightness value acquisition unit 56. The determination method of the determination unit 59a, 59b will be described later.

In another embodiment, the condition acquisition unit 51 may not be provided. For example, if the tool condition is uniquely defined, then the image processing unit 55a may perform image processing associated with this tool condition to generate a processed image 18a, and the determination unit 59a, 59b may determine whether this tool condition is satisfied on the basis of the processed image 18a.

In another embodiment, the tool movement control unit 52 may not be provided. For example, if the tool checking device 50a is installed at a location that is remote to the robot arm 30, the tool checking device 50a may not include the tool movement control unit 52.

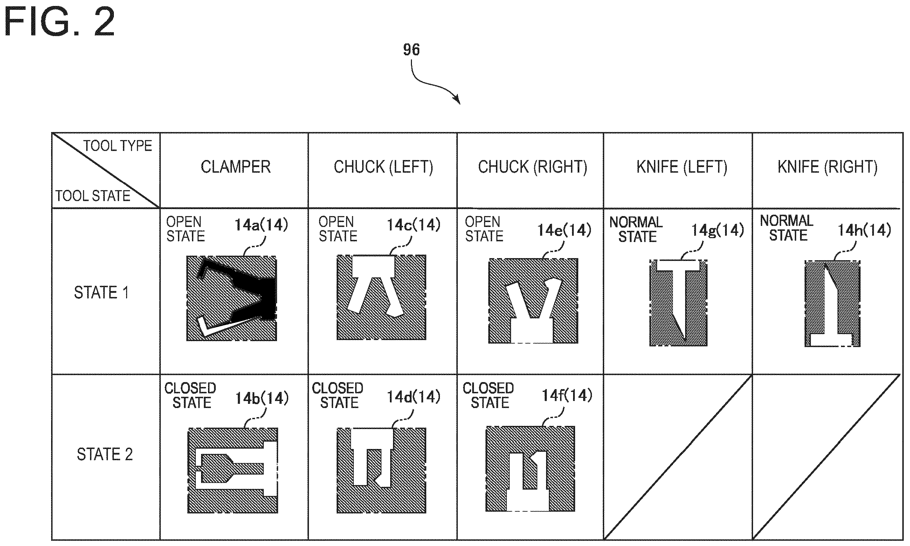

FIG. 2 is a diagram showing reference image data 96 which is data of a reference image 14 for executing image processing according to an embodiment.

The reference image 14 according to an embodiment is associated with the tool condition.

The image processing unit 55a according to an embodiment applies masking to the captured image 15 using the reference image 14 associated with the tool condition. As a result, an image in which the related area 17a associated with the tool condition is extracted is generated as the processed image 18a (see FIGs. 3A and 3B).

In an embodiment, as an example, a total of eight types of reference images 14a to 14h are prepared corresponding to tool conditions.

The reference image 14 according to an embodiment may be an image of the same size as the captured image 15 generated by the imaging device 8. Alternatively, it may be an image of a smaller size than the captured image 15. In this case, a part of the captured image 15 is cropped and masked using the reference image 14. For example, if the defined position of the tool 40 at the time of imaging varies according to the tool condition, the area to be cropped in the captured image 15 may vary according to the tool type.

FIGs. 3A and 3B are each a diagram for describing a determination method by the determination unit 59a, 59b (59) according to an embodiment.

In the determination shown in FIGs. 3A and 3B, the tool condition that needs to be satisfied is the clamper 41 in the open state. "Check A" in the figures shows the checking process of the clamper 41 in the open state, which satisfies the above tool condition. "Check B" in the figures shows the checking process of the clamper 41 in the closed state, which does not satisfy the above tool condition.

In an embodiment, in both checks A and B, the workpiece 5 is arranged below the tool 40 when imaged by the imaging device 8 (in FIGs. 3A and 3B, the workpiece 5 is hatched for ease of reading the figures). However, the workpiece 5 may not be visible in the background of the tool 40 when imaging by the imaging device 8.

In an embodiment, during checks A and B, the image processing unit 55a applies masking to the respective captured images 15 using the reference image 14a associated with the tool condition to generate the respective processed images 18a (18). Then, the brightness value acquisition unit 56a, 56b (56) acquires brightness values of the processed images 18a.

The brightness value acquisition unit 56a shown in FIG. 3A is configured to acquire the sum $X_2$ of brightness values of the processed image 18a.

For example, when the number of pixels in the x-direction (horizontal direction) of the processed image 18a is M, the number of pixels in the y-direction (vertical direction) is N, and the brightness value at any pixel is B, the sum $X_2$ of brightness values acquired by the brightness value acquisition unit 56a is defined by the equation (2). Here, i is any natural number equal to or less than the number of pixels in the horizontal direction of the processed image 18a, and j is any natural number equal to or less than the number of pixels in the vertical direction.

(Expression 2)

$$X_2 = \sum_{i=0}^{M} \sum_{j=0}^{N} |B_{ij}| \qquad \cdots \text{ Eq. (2)}$$

Since the brightness value in the masked area in the processed image 18a is 0, equation (2) provides the brightness value in the related area 17a of the processed image 18a.

In another embodiment, a process of acquiring the brightness values of pixels only in the related area 17a may be performed. Even in this case, the same value as in equation (2) is obtained.

The determination unit 59a according to an embodiment is configured to determine whether the tool condition is satisfied on the basis of the sum $X_2$ of brightness values acquired.

In an embodiment, the determination unit 59a determines whether the tool condition is satisfied in checks A and B on the basis of the sum $X_2$ of brightness values acquired by the brightness value acquisition unit 56a in each of checks A and B. For example, in check A, the clamper 41 appears over almost the entire related area 17a of the processed image 18a, and objects (e.g., workpiece 5) other than the clamper 41 hardly appear in the related area 17a. In this case, the sum $X_2$ of brightness values of the processed image 18a acquired by the brightness value acquisition unit 56a exceeds a threshold $T_2$, which is the criterion, and the determination unit 59a determines that the tool condition is satisfied.

In contrast, in check B, the proportion occupied by the clamper 41 in the related area 17a of the processed image 18a is smaller (the movable portion of the clamper 41 is mostly out of the related area 17a). As a result, the proportion of other objects (e.g., workpiece 5) in the related area 17a increases. Accordingly, the sum $X_2$ of brightness values of the processed image 18a falls below the threshold $T_2$, and the determination unit 59a determines that the tool condition is not satisfied.

The brightness value acquisition unit 56b shown in FIG. 3B is configured to acquire the sum $X_1$ of differences between brightness values identified by the following equation (1) using $B_{ij}$ which is a brightness value of each pixel of the processed image 18a, and $B_{sij}$ which is a brightness value set for each pixel according to the tool condition.

(Expression 3)

$$X_1 = \sum_{i=0}^{M} \sum_{j=0}^{N} |B_{ij} - Bs_{ij}| \qquad \cdots \text{ Eq. (1)}$$

The brightness value acquisition unit 56b according to an embodiment acquires the sum $X_1$ of differences between the brightness value $B_{ij}$ of each pixel of the processed image 18a and the brightness value $B_{sij}$ of each pixel of a normal image 12 corresponding to each pixel of the processed image 18 in each of checks A and B.

In an embodiment, as advance preparation, the image processing unit 55a applies masking to the captured image 15 of the tool 40 that is determined to satisfy the tool condition. As a result, a normal image 12, which is a processed image obtained by extracting the related area 17a associated with the tool condition, is generated in advance. By acquiring the normal image 12, the brightness value acquisition unit 56b acquires the brightness value $B_{sij}$.

In another embodiment, the image processing unit 55a may not generate the normal image 12. For example, the brightness value $B_{sij}$ set for each pixel of the processed image 18b may be stored in some memory in advance.

In another embodiment, $B_{sij}$ may be the brightness value for each pixel in the related area 17a only, instead of the brightness value for each pixel in the processed image 18a. In this case, $B_{sij}$ also represents the brightness value of each pixel corresponding to the related area 17a only.

The determination unit 59b according to an embodiment determines whether the tool condition is satisfied on the basis of the sum $X_1$ of differences between brightness values acquired.

The determination unit 59b according to an embodiment determines whether the tool condition is satisfied in checks A and B on the basis of the sum $X_1$ of differences between brightness values acquired by the brightness value acquisition unit 56b in each check. For example, in check A, since the difference between the processed image 18a and the normal image 12 is small, the sum $X_1$ of differences between brightness values falls below a threshold $T_1$, which is the criterion, and the determination unit 59b determines that the tool condition is satisfied.

In contrast, in check B, since the difference between the processed image 18a and the normal image 12 is large, the sum $X_1$ of differences between brightness values is not less than the threshold $T_1$. Thus, the determination unit 59b determines that the tool condition is not satisfied.

FIGs. 3A and 3B show the example where the tool 40 that does not satisfy the tool condition is the clamper 41 in the closed state, but the same determination result can be obtained with the same determination method even if another tool 40 that does not satisfy the tool condition is judged.

Further, in FIGs. 3A and 3B, the clamper 41 in the open state is shown as an example of the tool condition that needs to be satisfied, but the same determination result can be obtained with the same determination method even if the target to be judged is another tool condition.

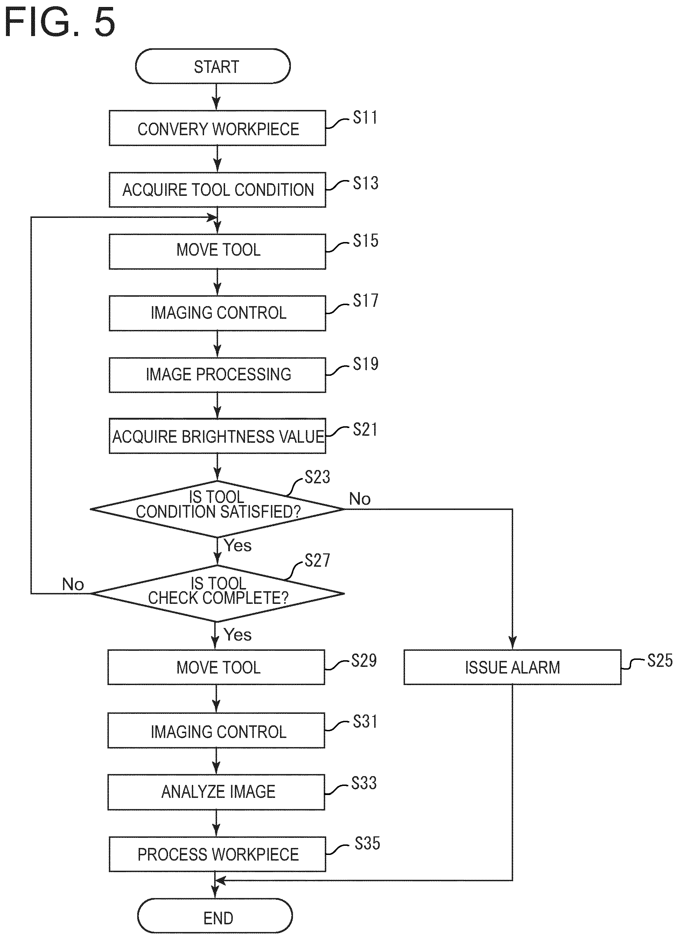

FIG. 4 is a block diagram showing an electrical configuration of the workpiece processing system 1a according to an embodiment. The components of the aforementioned tool checking device 50a (50) are implemented by a processing control unit 90 shown in FIG. 4. A specific implementation method will be described below with reference to FIG. 5.

The workpiece processing system 1 is provided with a processing control unit 90 including a processor 91.

The processor 91 reads out a processing control program (tool checking program) 95 stored in ROM 92 and loads it into RAM 93 to execute instructions included in the loaded processing control program 95. The processor 91 is CPU, GPU, MPU, DSP, other various kinds of computation devices, or a combination thereof. The processor 91 may be implemented by an integrated circuit of PLD, ASIC, FPGA, MCU, etc. The ROM 92 is an example of the storage device.

A memory 94, which is a component of the processing control unit 90, is a non-volatile memory which stores reference image data 96.

The processor 91 according to an embodiment is connected to an acceptance button 6, the conveyance device 7, the robot arm 30, the imaging device 8, and the alarm device 9 via an interface (not shown).

The acceptance button 6 according to an embodiment accepts a tool condition that needs to be satisfied by the tool 40. The acceptance button 6 may be a button with a mechanical structure or a touch panel button.

In an embodiment, the operator may input the tool condition to the acceptance button 6 when attaching the tool 40 to the robot arm 30. The input tool condition may be, for example, a plurality of conditions corresponding to the number of robot arms 30. The acceptance button 6 outputs the accepted tool condition to the processor 91. When the operator inputs the tool condition to the acceptance button 6, the operator may also input the robot arm 30 corresponding to the tool condition.

The processor 91 acquires the tool condition by acquiring data output from the acceptance button 6.

In another embodiment, the acceptance button 6 may not be provided. In this case, the processor 91 may acquire the tool condition indicated by data included in the processing control program 95, for example.

The conveyance device 7, the robot arm 30, the imaging device 8, and the alarm device 9 according to an embodiment operate in response to control signals received from the processor 91. The robot arm 30 according to an embodiment moves the tool 40 to a defined position in response to a control signal received. In an embodiment, the robot arm 30 further performs processing on the workpiece 5 in response to a control signal received.

The imaging device 8 according to an embodiment captures an image in response to a control signal received and outputs the generated captured image 15 to the processor 91. The processor 91 according to an embodiment outputs the image acquired from the imaging device 8 to the RAM 93. The captured image 15 may be stored in the memory 94 instead of the RAM 93.

The alarm device 9 according to an embodiment is a device for issuing an alarm in response to a control signal received when the processor 91 determines that the tool condition is not satisfied. The alarm device 9 according to an embodiment may be an image display device, a speaker, a light emitting device, or a combination thereof.

FIG. 5 is a flowchart of a processing control process according to an embodiment. In the processing control process, the processor 91 loads the processing control program 95 stored in the ROM 92 into the RAM 93 to execute the following steps. Information processed by the processor 91 in executing the process is stored in the RAM 93 or the memory 94, as appropriate. In the following description, "step" is abbreviated as "S".

The processor 91 controls the conveyance device 7 so that the workpiece 5 is conveyed to the processing area (S11).

Then, the processor 91 acquires a tool condition that needs to be satisfied by the tool 40 (S13). For example, the processor 91 acquires a tool condition on the basis of data output from the acceptance button 6. The processor 91 executing S11 functions as the condition acquisition unit 51. In an embodiment where a plurality of robot arms 30 are provided, the processor 91 may acquire a tool condition corresponding to each robot arm 30.

The processor 91 controls the robot arm 30 so as to move the tool 40 to a defined position according to the tool condition acquired in S13 (S15). For example, if the tool condition acquired in S11 includes "clamper 41 in the open state", the processor 91 performs control so that the clamper 41 attached to robot arm 30a moves to the defined position, and the chuck 42 and the knife 43 attached to the robot arms 30b and 30c retreat to other positions. The processor 91 executing S15 functions as the tool movement control unit 52.

The processor 91 controls the imaging device 8 so as to capture an image of the tool 40 moved to the defined position by execution of S15 (S17). The processor 91 stores the captured image 15 generated by the imaging device 8 into the RAM 93, for example. The processor 91 executing S17 functions as the imaging control unit 53.

The processor 91 processes the captured image 15 generated in S17 (S19). In an embodiment, the processor 91 refers to the reference image data 96 stored in the memory 94 and acquires the reference image 14 according to the tool condition acquired in S13. Then, using the acquired reference image 14, masking is applied to the captured image 15 acquired in S17. As a result, the processor 91 generates an image in which the related area 17a (17) associated with the tool condition is extracted as a processed image 18a (18). The processor 91 executing S19 functions as the image processing unit 55a (55).

The processor 91 acquires brightness values of the processed image 18a (17) on the basis of the processed image 18a generated (S21). In an embodiment, the processor 91 acquires the sum $X_1$ of differences between brightness values or the sum $X_2$ of brightness values, for example, on the basis of the equation (1) or equation (2).

When acquiring the sum $X_1$ of differences between brightness values, the processor 91 may refer to the normal image 12 stored in the memory 94 to acquire the brightness value $B_{sij}$ of each pixel.

The processor 91 executing S21 functions as the brightness value acquisition unit 56a, 56b (56).

On the basis of the acquired brightness values, the processor 91 determines whether the tool condition acquired in S13 is satisfied (S23).

For example, the processor 91 determines whether the tool condition is satisfied by comparing the sum $X_1$ of differences between brightness values or the sum $X_2$ of brightness values with the threshold $T_1$ or the threshold $T_2$. The processor 91 executing S23 functions as the determination unit 59a, 59b (59).

If it is determined that the tool condition is not satisfied (S23: NO), the processor 91 controls the alarm device 9 to issue an alarm (S25), and ends this control process.

In an embodiment, when the alarm is issued, the operator recognizes that the tool condition is not satisfied, and can replace the tool 40 or perform other operations on the robot arm 30 to satisfy the tool condition.

In an embodiment, if it is determined that the tool condition is satisfied (S23: YES), the processor 91 determines whether the tool check is completed (S27). For example, when there remains a tool condition that has not been determined to be satisfied or not among multiple tool conditions acquired in S13 (S27: NO), the processor 91 repeats S15 to S23. On the other hand, if the determination of all tool conditions is completed (S27: YES), the processor 91 proceeds to S29.

The processor 91 controls the robot arm 30 so that the tool 40 in the defined position retreats to a different position (S29). The processor 91 then controls the imaging device 8 to capture an image of the workpiece 5 (S31) and analyzes the image generated by the imaging device 8 (S33). In an embodiment, the processor 91 performs image analysis for suitable processing on the imaged workpiece 5. As a specific example, if the workpiece 5 is a boned limb of livestock, image analysis is performed to identify the position of the bone in the workpiece 5. The analysis may be performed, for example, by inputting the image taken in S31 to a previously machine-learned trained model. In this case, the processor 91 may be equipped with a GPU for performing arithmetic processing based on the machine-learned trained model. The processor 91 controls the robot arm 30 so that the workpiece 5 is processed on the basis of the result of image analysis (S35). After the processing of the workpiece 5 is completed, the processor 91 ends this control process.

In another embodiment, the execution timing of S11 may be after it is determined that the tool check is completed (S27: YES). In this case, the workpiece 5 does not appear in the captured image 15 in the imaging of S17.

In another embodiment, for example, when the tool condition to be judged is uniquely defined, neither S13 nor S27 may be executed. The uniquely defined tool condition means not only a single tool condition but also multiple tool conditions.

(Second embodiment)

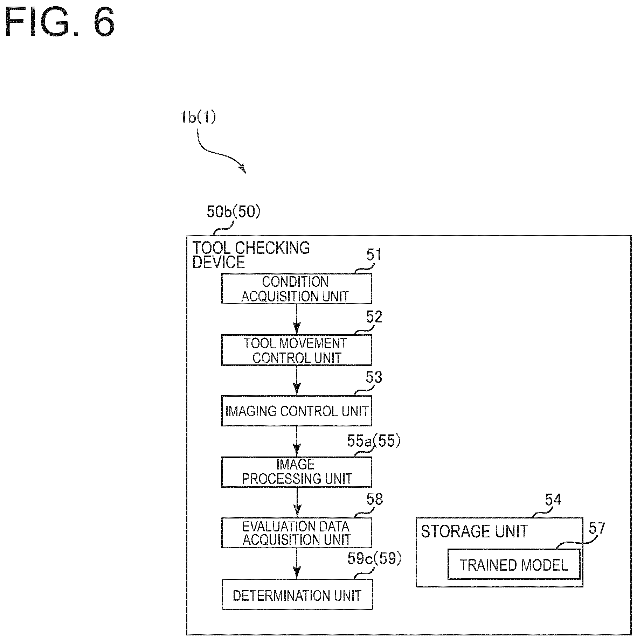

FIG. 6 is a diagram of a workpiece processing system 1b (1) according to the second embodiment. The same components as in the first embodiment are denoted by the same reference numerals in the drawings, and detailed description thereof will be omitted (the same applies to the third embodiment, which will be described later).

The workpiece processing system 1b includes a tool checking device 50b (50) instead of the tool checking device 50a (50).

The tool checking device 50b includes, instead of the brightness value acquisition unit 56 and the determination unit 59a (59), a storage unit 54, an evaluation data acquisition unit 58, and a determination unit 59c (59).

In an embodiment, a trained model 57 stored in the storage unit 54 is configured to output evaluation data regarding whether the tool 40 satisfies the tool condition in response to input of data regarding the processed images 18a (18) generated by the image processing unit 55a.

The trained model 57 according to an embodiment is a model obtained by deep learning. For example, the trained model 57 may be a GAN (Generative Adversarial Network). More precisely, the GAN is EGBAD (Efficient GAN-Based Anomaly Detection). In another embodiment, the trained model 57 may be a CNN (Convolution Neural Network) or RNN (Recurrent Neural Network).

The evaluation data acquisition unit 58 according to an embodiment is configured to acquire the evaluation data output from the trained model 57 into which the processed image 18a generated by the image processing unit 55a has been input. A dedicated GPU unit may be provided separately from the condition acquisition unit 51 and the tool movement control unit 52 as a processor unit that has a function of the evaluation data acquisition unit 58.

The determination unit 59c (59) according to an embodiment is configured to determine whether the tool condition is satisfied on the basis of the evaluation data acquired. The determination method will be described in detail below.

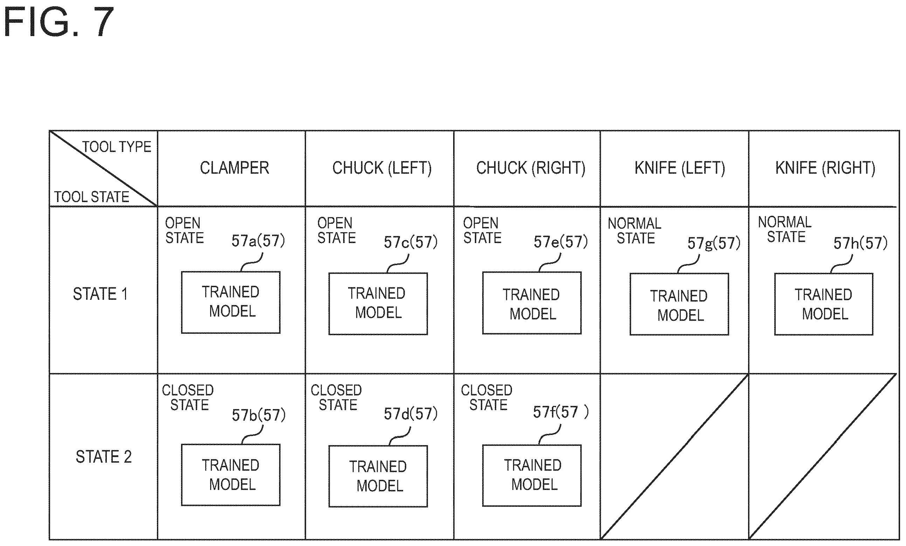

FIG. 7 is a diagram showing trained models 57 corresponding to tool conditions according to an embodiment.

The trained model 57 according to an embodiment is stored in the storage unit 54 in association with the tool condition. For example, as shown in FIG. 7, trained models 57a to 57f (57) according to an embodiment are stored in the storage unit 54 in association with tool conditions regarding the tool type and the tool state.

In another embodiment, trained models 57 may be stored in the storage unit 54 in association with tool conditions regarding either the tool type or the tool state. Alternatively, the storage unit 54 may store only a single trained model 57.

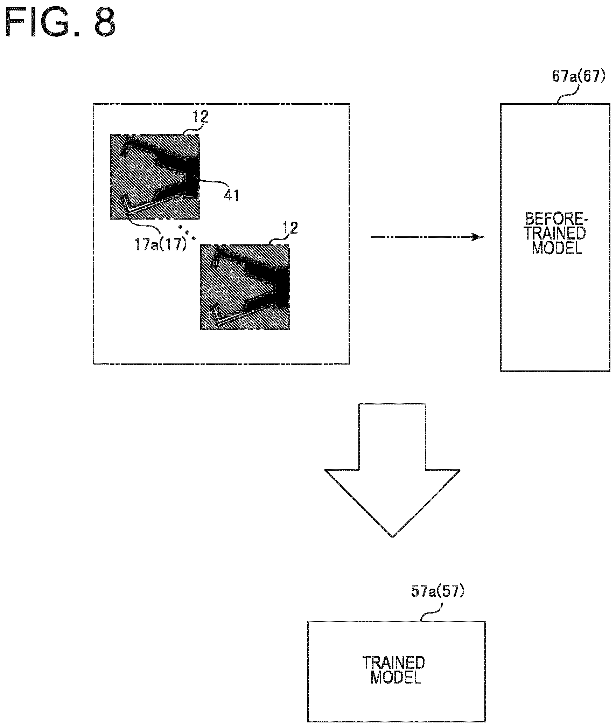

FIG. 8 is a diagram showing the process of generating a trained model 57a (57) according to an embodiment.

For example, a before-trained model 67a (67) of the trained model 57a corresponding to the tool condition of the clamper 41 in the open state is prepared. Further, normal images 12 obtained by processing a plurality of captured images 15 that have been determined to satisfy this tool condition by the image processing unit 55a are input to the before-trained model 67a as teacher data 65. Thereby, the before-trained model 67a implements machine learning to generate the trained model 57a.

The process of generating the other trained models 57b to 57h is the same, so the detailed description is omitted.

In another embodiment, the image used as the teacher data 65 may be the captured image 15 before image processing.

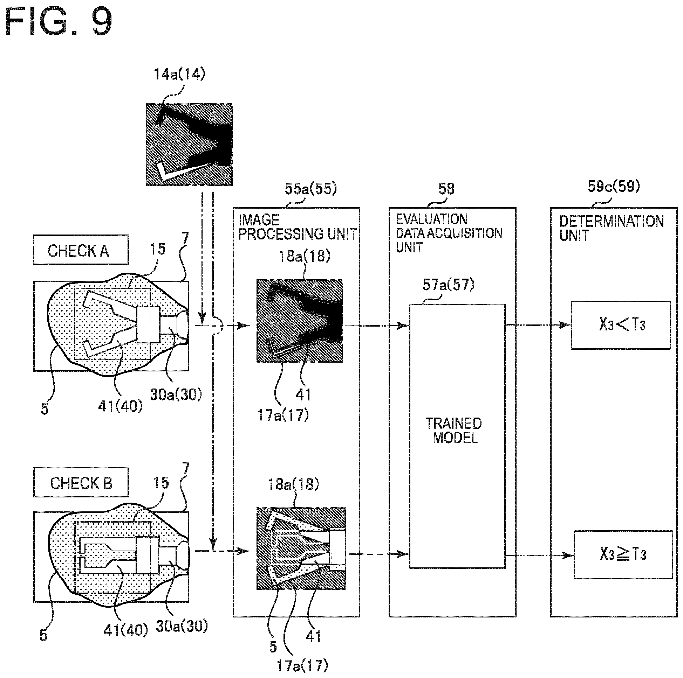

FIG. 9 is a diagram for describing a determination method by the determination unit 59c (59) according to an embodiment.

In FIG. 9, the tool condition to be satisfied, the tool 40 to be judged and the captured image 15 to be processed in each of checks A and B are all the same as in FIGs. 3A and 3B.

In the determination shown in FIG. 9, through each of checks A and B, the image processing unit 55a (55) generates a processed image 18a (18) similar to those in FIGs. 3A and 3B.

The evaluation data acquisition unit 58 which acquires the processed image 18a uses the trained model 57a corresponding to the tool state (clamper 41 in the open state). Specifically, the evaluation data acquisition unit 58 inputs the respective processed images 18a to the trained model 57a to acquires values $X_3$, which is the respective evaluation data.

In an embodiment, the determination unit 59a determines whether the tool condition is satisfied by comparing each acquired value $X_3$ with a threshold $T_3$, which is the criterion. For example, in an embodiment using EGBAD as the trained model 57, the value $X_3$ output from the discriminator (not shown), which is a component of the trained model 57, is less than the threshold $T_3$ in check A and not less than the threshold $T_3$ in check B. Thus, the determination unit 59c determines that the tool condition is satisfied in check A, and that the tool condition is not satisfied in check B.

Depending on the specific model of the trained model 57, the value $X_3$ of the evaluation data may exceed the threshold $T_3$ in check A.

(Third embodiment)

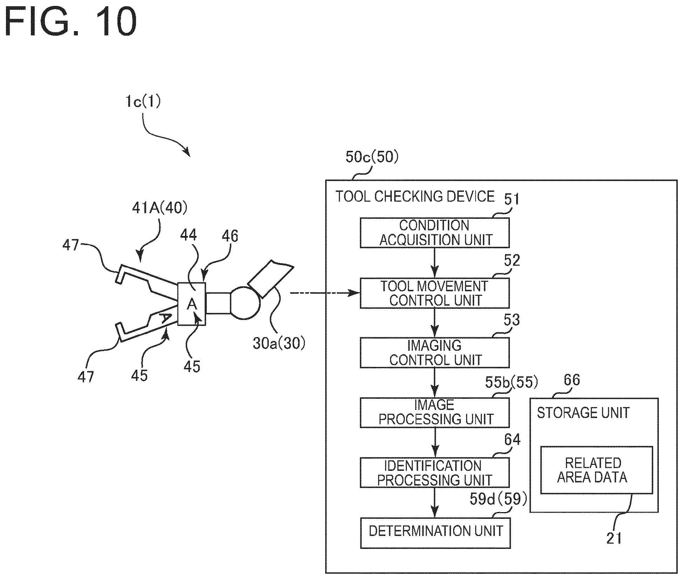

FIG. 10 is a diagram of a workpiece processing system 1c (1) according to the third embodiment. The workpiece processing system 1c includes, instead of the clamper 41 (tool 40) and the tool checking device 50a (50a) of the workpiece processing system 1a, a clamper 41a (tool 40) and a tool checking device 50c (50).

The clamper 41a includes a support portion 44 and a pair of movable portions 47 rotatably supported by the support portion 44. In an embodiment, the pair of movable portions 47 are opened and closed by driving force supplied from an air cylinder (not shown). In another embodiment, one of the pair of movable portions 47 may be a fixed portion fixed to the support portion 44.

The clamper 41a further includes an outer surface 46 with a mark 45. In an embodiment, the outer surface 46 is included on the surface of each of the support portion 44 and the pair of movable portions 47. The mark 45 according to an embodiment is formed on each of the support portion 44 and one of the movable portions 47. The mark 45 is a character, figure, symbol, or a combination thereof. The mark 45 according to an embodiment is a character.

In an embodiment, the mark 45 is formed by electrolytic marking on the tool 40. In this embodiment, the cleanliness of the tool 40 can be maintained compared to an embodiment where the mark 45 is applied by a seal attached to the tool 40, and the cost increase can be reduced compared to an embodiment where the mark 45 is applied by laser engraving.

The tool checking device 50c includes, instead of the image processing unit 55a (55), the brightness value acquisition unit 56, and the determination unit 59a (59), an image processing unit 55b (55), a storage device 66, an identification processing unit 64, and a determination unit 59d (59).

The image processing unit 55b according to an embodiment is configured to perform, on the captured image 15, image processing associated with the tool condition of the tool 40 having the outer surface 46 with the mark 45. The image processing unit 55b may apply masking using a reference image (not shown) to the captured image 15, or cropping to the captured image 15. The image processing on the captured image 15 generates a processed image 18b (18) in which a related area 17b is extracted.

The storage device 66 according to an embodiment stores related area data 21 in which the related area 17b extracted by the image processing unit 55b is associated with the tool condition. The related area 17b according to an embodiment is an area inside the contour of the tool 40 that satisfies the tool condition, or more specifically, an area containing the mark 45 of the tool 40 that satisfies the tool condition. The related area 17b according to an embodiment may or may not be an area along the contour of the tool 40.

The identification processing unit 64 according to an embodiment is configured to execute a process of identifying the mark 45 on the processed image 18b (18) generated. For example, in an embodiment where the mark 45 is a character, the identification processing unit 64 is configured to execute a process of identifying a character as the mark 45 on the processed image 18b. The process of identifying a character is, for example, an optical character recognition process.

The determination unit 59d according to an embodiment is configured to determine whether the tool condition is satisfied on the basis of the result of the process by the identification processing unit 64. For example, in an embodiment where the identification processing unit 64 performs an optical character recognition process, the determination unit 59d may determine whether the tool condition is satisfied according to whether the processed image 18b contains the mark 45, which is a character.

In another embodiment, the determination unit 59d may determine whether the tool condition is satisfied according to a specific character recognized by the identification processing unit 64.

In another embodiment, the mark 45 may be a figure such as a straight line or a circle instead of a character. Even in this case, by identifying the presence or absence of the mark 45 by the identification processing unit 64, the determination unit 59d determines whether the tool condition is satisfied.

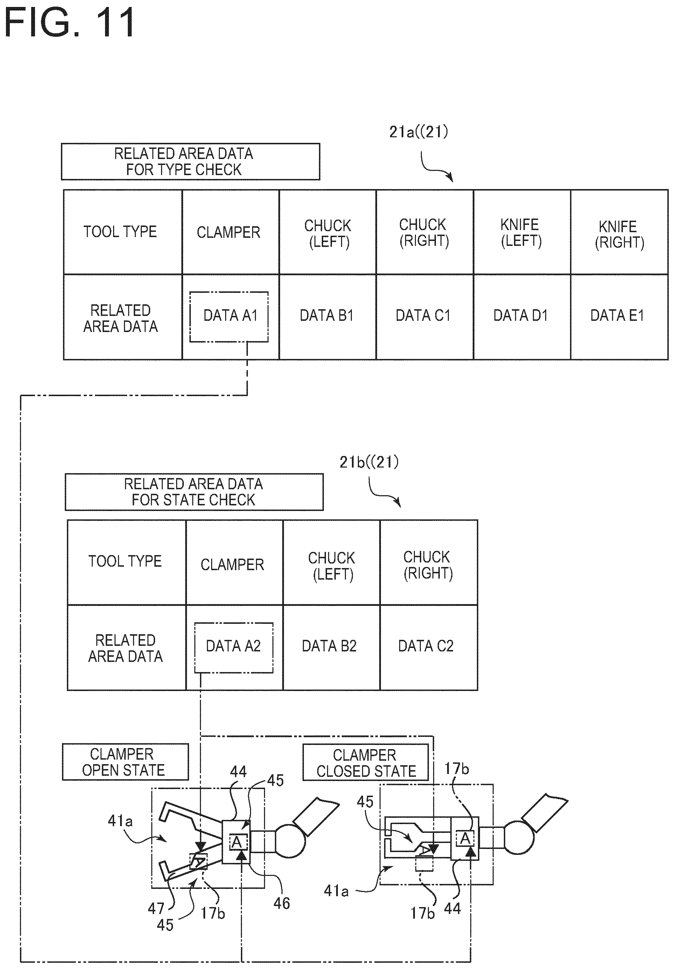

FIG. 11 is a diagram showing the related area data 21 according to an embodiment. In an embodiment, the related area data 21 includes related area data 21a referred to when determining the tool condition regarding the tool type, and related area data 21b referred to when determining the tool condition regarding the tool state.

In an embodiment, the data stored in the related area data 21a is assigned to each type of the tool 40 (clamper 41, chucks 42L, 42R, knives 43L, 43R). For example, the related area 17b represented by data A1 assigned to the clamper 41 indicates an area that contains the mark 45 regardless of whether the clamper 41 is in the open or closed state. More precisely, as an example, data A1 is the related area 17b that contains the mark 45 applied to the support portion 44.

In an embodiment, the data stored in the related area data 21b is assigned to each type of the tool 40 (clamper 41, chucks 42L, 42R). For example, the related area 17b represented by data A2 assigned to the clamper 41 indicates an area in which the mark 45 is placed only when the clamper 41 is in the open state. The related area 17b represented by data A2 may be an area in which the mark 45 is placed only when the clamper 41 is in the closed state.

In another embodiment, in the related area data 21b, data may be assigned according to each of the states of the tool 40 (e.g., open and closed state of clamper 41). In this case, the related area 17b represented by data assigned to each state of the tool 40 may all be an area in which the mark 45 is placed.

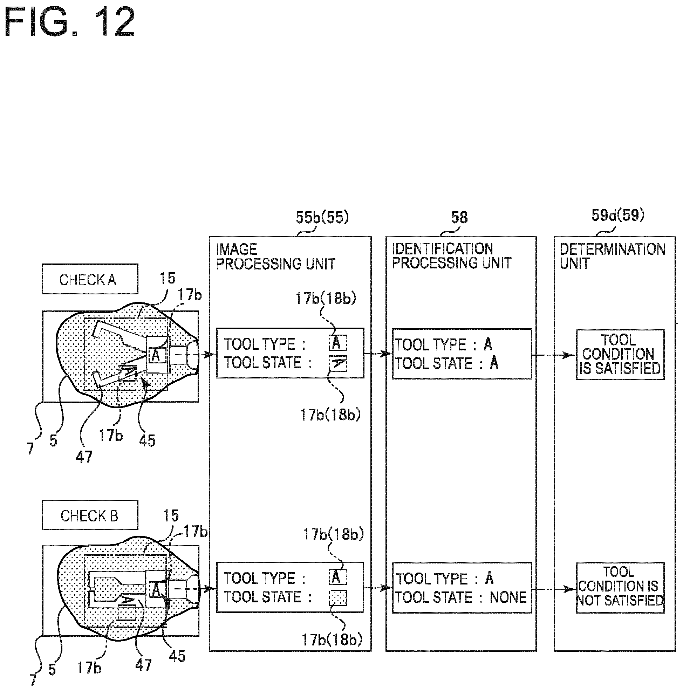

FIG. 12 is a diagram for describing a determination method by the determination unit 59d (59) according to an embodiment. In FIG. 12, the tool condition to be satisfied, the tool 40 to be judged and the captured image 15 to be processed in each of checks A and B are all the same as in FIGs. 3A and 3B.

In the determination shown in FIG. 12, through each of checks A and B, the image processing unit 55b (55) generates a processed image 18b (18).

In checks A and B according to an embodiment, the image processing unit 55b applies masking to the captured image 15 using a reference image (not shown) corresponding to the tool condition that needs to be satisfied to acquire a processed image 18b in which the related area 17b is extracted. In FIG. 12, the masked image area is not depicted. Then, the identification processing unit 64 executes a process (e.g., optical character recognition process) to identify the mark 45 in the respective related areas 17b represented by data A1 and A2 of the related area data 21 in the processed image 18b (of the captured image 15) acquired from the image processing unit 55b.

For example, in check A, the mark 45 (specifically the letter "A") is recognized within the related area 17b for each of the tool type and tool state. The determination unit 59d determines that the tool condition is satisfied because the mark 45 can be recognized for each of the tool type and tool state.

In contrast, in check B, the identification processing unit 64 recognizes the mark 45 in the related area 17b for the tool type, but does not recognize the mark 45 in the related area 17b for the tool state. In this case, the determination unit 59d determines that the tool condition is not satisfied because the tool condition regarding the tool state is not satisfied. In check B, the determination unit 59 may determine that the tool condition regarding the tool type is satisfied, while the tool condition regarding the tool state is not satisfied.

In another embodiment, the image processing unit 55b may generate a processed image 18b by cropping the captured image 15 to extract the respective related areas 17b represented by data A1 and A2 of the related area data 21. In this case, the related area 17b and the processed image 18b are the same image as shown in FIG. 12. Even in this case, by executing a process to identify the mark 45 by the identification processing unit 64, the determination unit 59d can obtain the same determination result as above.

Hereinafter, the tool checking device 50 for a robot arm, the tool checking program (processing control program 95) for a robot arm, and the tool checking method for a robot arm according to some aspects of the present disclosure will be described.

(1) A tool checking device 50 for a robot arm according to at least one aspect of the present invention includes: an image processing unit 55 configured to perform, on a captured image 15 of a tool 40 attached to the robot arm 30, image processing associated with a tool condition regarding a tool type or tool state that needs to be satisfied by the tool 40, and generate a processed image 18 in which a related area 17 associated with the tool condition is extracted; and a determination unit 59 configured to determine whether the tool 40 attached to the robot arm 30 satisfies the tool condition, on the basis of the processed image 18.

With the above configuration (1), the related area 17 associated with the tool condition is extracted to generate the processed image 18, and on the basis of the processed image 18 generated, the determination unit 59 determines whether the tool condition is satisfied. Thus, it is possible to accurately determine whether the tool 40 satisfies the tool condition.

Additionally, the imaging device 8 which generates the captured image 15 as the original of the processed image 18 can also generate another image to be used in the image analysis process (S31). That is, the imaging device 8 has both a function of generating an image for determining whether the tool condition is satisfied and a function of generating an image for the image analysis process. This avoids increasing the complexity of the configuration of the tool checking device 50, reducing the cost of the workpiece processing system 1.

Additionally, the above configuration eliminates the need for a dedicated sensor in the tool 40 to determine whether the tool condition is satisfied. For example, in an embodiment where the workpiece 5 is fresh meat, the space in which the workpiece 5 is processed tends to be wet. In this embodiment, with the above configuration, it is not necessary to apply waterproofing and anti-fouling measures to the tool 40 due to the sensor, which is an electronic component, installed in the tool 40, and it is possible to easily determine whether the tool condition is satisfied.

As a method to determine whether the tool condition is satisfied, an engagement mechanism that allows only a specific tool 40 to be attached to the robot arm 30 could be provided on the robot arm 30 and the tool 40. However, this method leads to increased complexity of the mechanism and also limits the type of the tool 40 attached to the robot arm 30. Further, this method can determine the tool condition regarding the tool type, but it is difficult to determine the tool condition regarding the tool state (e.g., it is difficult to properly determine the open/closed state of the clamper 41). In this regard, according to the embodiment of the above configuration, it is possible to determine not only the tool condition regarding the tool type but also the tool condition regarding the tool state, while avoiding complexity of the mechanism and reduction in the number of types of tools 40.

(2) According to some aspects of the present disclosure, in the above configuration (1), the tool checking device 50a further includes a brightness value acquisition unit 56a, 56b (56) configured to acquire a brightness value of the processed image 18a (18). The determination unit 59a, 59b (59) is configured to determine whether the tool condition is satisfied on the basis of the brightness value acquired.

With the above configuration (2), the determination unit 59a, 59b can perform quantitative determination as to whether the tool condition is satisfied on the basis of the brightness value of the processed image 18a. Thus, it is possible to accurately determine whether the tool 40 satisfies the tool condition.

(3) According to some aspects of the present disclosure, in the above configuration (2), the brightness value acquisition unit 56a is configured to acquire the sum $X_2$ of brightness values of the processed image 18a (18). The determination unit 59a is configured to determine whether the tool condition is satisfied on the basis of the sum $X_2$ of

brightness values acquired.

With the above configuration (3), the determination unit 59a determines whether the tool condition is satisfied on the basis of the sum of brightness values over the entire area of the processed image 18a. Therefore, even when the imaging conditions of the tool 40 change, it is possible to accurately determine whether the tool condition is satisfied.

The imaging conditions of the tool 40 include the position of the tool 40 at the time of imaging, the degree of reflection of objects (e.g., workpiece 5) other than the tool 40, small changes in the position of the imaging device 8, or a combination thereof.

(4) According to some aspects of the present disclosure, in the above configuration (2), the brightness value acquisition unit 56b is configured to acquire a sum $X_2$ of differences between brightness values identified by the following equation (1) using $B_{ij}$ which is a brightness value of each pixel of the processed image 18a (18), where i is any natural number equal to or less than the number of pixels in a horizontal direction of the processed image 18 and j is any natural number equal to or less than the number of pixels in a vertical direction of the processed image 18, and $B_{sij}$ which is a brightness value set for each pixel according to the tool condition. The determination unit 59b is configured to determine whether the tool condition is satisfied on the basis of the sum $X_1$ of differences between brightness values acquired.

(Expression 4)

$$X_1 = \sum_{i=0}^{M} \sum_{j=0}^{N} \left| B_{ij} - Bs_{ij} \right| \qquad \cdots \text{ Eq. (1)}$$

With the above configuration (4), since the sum $X_1$ of differences identified in equation (1) changes according to whether the tool condition is satisfied, it is possible to accurately determine whether the tool 40 satisfies the tool condition.

(5) According to some aspects of the present disclosure, in the above configuration (1), the tool checking device 50b further includes: a storage unit storing a trained model 57 configured to output evaluation data regarding whether the tool 40 satisfies the tool condition in response to input of data regarding the processed image 18; and an evaluation data acquisition unit 58 configured to acquire the evaluation data output from the trained model 57 into which the processed image 18a (18) generated by the image processing unit 55a (55) has been input. The determination unit 59c (59) is configured to determine whether the tool condition is satisfied on the basis of the evaluation data acquired.

With the above configuration (5), the determination unit 59c determines whether the tool condition is satisfied on the basis of the evaluation data output from the trained model 57. Thus, it is possible to accurately determine whether the tool 40 satisfies the tool condition.

(6) According to some aspects of the present disclosure, in the above configuration (1), the image processing unit 55 is configured to perform, on the captured image 15, the image processing associated with the tool condition of the tool 40 having an outer surface 46 with a mark 45. The tool checking device 50c (50) further includes an identification processing unit 64 configured to execute a process of identifying the mark 45 on the processed image 18b (18) generated. The determination unit 59d is configured to determine whether the tool condition is satisfied on the basis of a result of the process by the identification processing unit 64.

With the above configuration (6), if the processed image 18b (18) associated with the tool condition is generated so that the identification result of the identification processing unit 64 changes according to whether the tool condition is satisfied, it is possible to accurately determine whether the tool 40 satisfies the tool condition.

(7) According to some aspects of the present disclosure, in the above configuration (6), the identification processing unit 64 is configured to execute a process of identifying a character as the mark 45 on the processed image 18b.

With the above configuration (7), the determination unit 59d determines whether the tool condition is satisfied on the basis of the result of the process of identifying a character as the mark 45 by the identification processing unit 64. Thus, it is possible to accurately determine whether the tool 40 satisfies the tool condition.

(8) According to some aspects of the present disclosure, in any one of the above configurations (1) to (7), the tool checking device 50 further includes a condition acquisition unit 51 configured to acquire the tool condition according to a work schedule of the robot arm 30 after the determination unit 59a, 59b (59) determines that the tool condition is satisfied. The image processing unit 55a (55) is configured to perform, on the captured image 15, the image processing associated with the tool condition acquired by the condition acquisition unit 51 among a plurality of the tool conditions prepared in advance. The determination unit 59a, 59b (59) is configured to determine whether the tool condition acquired by the condition acquisition unit 51 is satisfied.

With the above configuration (8), the determination unit 59a, 59b determines whether the tool condition corresponding to the work schedule of the robot arm 30 is satisfied. Therefore, the determination unit 59a, 59b can accurately determine whether the robot arm 30 should perform the scheduled work.

(9) According to some aspects of the present disclosure, in any one of the above configurations (1) to (8), the image processing unit 55a (55) is configured to apply masking to the captured image 15 using a reference image 14 associated with the tool condition, and generate an image in which the related area 17 associated with the tool condition is extracted as the processed image 18.

With the above configuration (9), the determination unit 59a, 59b can accurately determine whether the tool 40 satisfies the tool condition on the basis of the processed image 18a (18).

(10) A tool checking program (processing control program 95) for checking a tool 40 for a robot arm according to at least one aspect of the present invention is configured to cause a computer to execute: an image processing step (S19) of performing, on a captured image 15 of the tool 40 attached to the robot arm 30, image processing associated with a tool condition regarding a tool type or tool state that needs to be satisfied by the tool 40, and generating a processed image 18 in which a related area 17 associated with the tool condition is extracted; and a determination step (S23) of determining whether the tool 40 attached to the robot arm 30 satisfies the tool condition, on the basis of the processed image 18.

With the above configuration (10), it is possible to accurately determine whether the tool 40 satisfies the tool condition for the same reason as the above (1).

(11) A method for checking a tool 40 for a robot arm according to at least one aspect of the present invention includes: an image processing step (S19) of performing, on a captured image 15 of the tool 40 attached to the robot arm 30, image processing associated with a tool condition regarding a tool type or tool state that needs to be satisfied by the tool 40, and generating a processed image 18 in which a related area 17 associated with the tool condition is extracted; and a determination step (S23) of determining whether the tool 40 attached to the robot arm 30 satisfies the tool condition, on the basis of the processed image 18.

With the above configuration (11), it is possible to accurately determine whether the tool 40 satisfies the tool condition for the same reason as the above (1).

Embodiments of the present disclosure were described in detail above, but the present disclosure is not limited thereto, and various amendments and modifications may be implemented.

For example, an embodiment combining at least two of the first, second, and third embodiments described above may be employed.

As a specific example, whether the tool condition is satisfied may be determined on the basis of the acquisition result of the brightness value acquisition unit 56 and the output result of the trained model 57. In this case, the determination unit 59 may determine that the tool condition is satisfied only when both the acquisition result of the brightness value acquisition unit 56 and the output result of the trained model 57 indicate that the tool condition is satisfied. Thereby, it is possible to prevent the determination unit 59 from erroneously determining that the tool condition is satisfied even though the actual tool 40 does not satisfy the tool condition.

As another example, it may be determined that the tool condition is satisfied when either one of the acquisition result of the brightness value acquisition unit 56 or the output result of the trained model 57 indicates that the tool condition is satisfied. Thereby, it is possible to prevent the determination unit 59 from erroneously determining that the tool condition is not satisfied even though the actual tool 40 satisfies the tool condition.

Reference Signs List

14 Reference image
17 Related area
18 Processed image
30 Robot arm
40 Tool
41, 41a Clamper
42, 42L, 42R Chuck
43, 43L, 43R Knife
45 Mark
46 Outer surface
50 Tool checking device
51 Condition acquisition unit
54 Storage unit
55 Image processing unit
56 Brightness value acquisition unit
57 Trained model
57a to 57h Trained model
58 Evaluation data acquisition unit
59 Determination unit
64 Identification processing unit

95 Processing control program

**Claims**

1. A workpiece processing system (1)comprising:

   a robot arm (30) to which a tool (40) for processing a food product as a workpiece (5) is attached;
   an imaging device (8) for capturing an image of the workpiece (5), the robot arm (30) being configured to process the workpiece (5) by the tool (40) based on results of image analysis of the captured image of the workpiece (5); and
   a tool checking device (50) for checking the tool (40) attached to the robot arm (30), the tool checking device (50) comprising:

      an image control unit (53) for controlling the imaging device (8) so as to capture an image of the tool (40) attached to the robot arm (30);
      an image processing unit (55) configured to perform, on the captured image of the tool (40) attached to the robot arm (30), image processing associated with a tool condition regarding a tool type or tool state that needs to be satisfied by the tool (40), and generate a processed image in which a related area associated with the tool condition is extracted; and
      a determination unit (59) configured to determine whether the tool (40) attached to the robot arm (30) satisfies the tool condition, on the basis of the processed image.

2. The workpiece processing system (1) according to claim 1, further comprising a brightness value acquisition unit (56) configured to acquire a brightness value of the processed image,
   wherein the determination unit (59) is configured to determine whether the tool condition is satisfied on the basis of the brightness value acquired.

3. The workpiece processing system (1) according to claim 2,

   wherein the brightness value acquisition unit (56) is configured to acquire a sum of brightness values of the processed image, and
   wherein the determination unit (59) is configured to determine whether the tool condition is satisfied on the basis of the sum of brightness values acquired.

4. The workpiece processing system (1) according to claim 2,

   wherein the brightness value acquisition unit (56) is configured to acquire a sum $X_1$ of differences between brightness values identified by the following equation (1) using $B_{ij}$ which is a brightness value of each pixel of the processed image, where i is any natural number equal to or less than the number of pixels in a horizontal direction of the processed image and j is any natural number equal to or less than the number of pixels in a vertical direction of the processed image, and $B_{sij}$ which is a brightness value set for each pixel according to the tool condition, and
   wherein the determination unit (59) is configured to determine whether the tool condition is satisfied on the basis of the sum $X_1$ of differences between brightness values acquired.

$$X_1 = \sum_{i=0}^{M} \sum_{j=0}^{N} \left| B_{ij} - Bs_{ij} \right| \qquad \cdots \text{ Eq. (1)}$$

5. The workpiece processing system (1) according to claim 1, further comprising:

   a storage unit (54) storing a trained model (57) configured to output evaluation data regarding whether the tool (40) satisfies the tool condition in response to input of data regarding the processed image; and
   an evaluation data acquisition unit (58) configured to acquire the evaluation data output from the trained model (57) into which the processed image generated by the image processing unit (55) has been input,
   wherein the determination unit (59) is configured to determine whether the tool condition is satisfied on the basis of the evaluation data acquired.

**6.** The workpiece processing system (1) according to claim 1,

wherein the image processing unit (55) is configured to perform, on the captured image of the tool, the image processing associated with the tool condition of the tool having an outer surface with a mark (45),
wherein the tool checking device (50) further comprises an identification processing unit (64) configured to execute a process of identifying the mark (45) on the processed image generated, and
wherein the determination unit (59) is configured to determine whether the tool condition is satisfied on the basis of a result of the process by the identification processing unit.

**7.** The workpiece processing system (1) according to claim 6,
wherein the identification processing unit (64) is configured to execute a process of identifying a character as the mark on the processed image.

**8.** The workpiece processing system (1) according to any one of claims 1 to 7, further comprising a condition acquisition unit (51) configured to acquire the tool condition according to a work schedule of the robot arm (30) after the determination unit (59) determines that the tool condition is satisfied,

wherein the image processing unit (55) is configured to perform, on the captured image of the tool, the image processing associated with the tool condition acquired by the condition acquisition unit (51) among a plurality of the tool conditions prepared in advance, and
wherein the determination unit (59) is configured to determine whether the tool condition acquired by the condition acquisition unit (51) is satisfied.

**9.** The workpiece processing system (1) according to any one of claims 1 to 8,
wherein the image processing unit (55) is configured to apply masking to the captured image of the tool using a reference image associated with the tool condition, and generate an image in which the related area associated with the tool condition is extracted as the processed image.

**10.** A method for processing a workpiece with the workpiece processing system (1) according to any one of claims 1 to 9, the method comprising:

an image control step (S17) of controlling the imaging device so as to capture an image of the tool attached to the robot arm;
an image processing step (S19) of performing, on the captured image of the tool attached to the robot arm, image processing associated with a tool condition regarding a tool type or tool state that needs to be satisfied by the tool, and generating a processed image in which a related area associated with the tool condition is extracted;
a determination step (S23) of determining whether the tool attached to the robot arm satisfies the tool condition, on the basis of the processed image; and
a workpiece processing step (S35) of processing the workpiece by the tool based on results of the image analysis of the captured image of the workpiece.

**Patentansprüche**

**1.** Werkstückverarbeitungssystem (1), umfassend:

einen Roboterarm (30), an dem ein Werkzeug (40) zur Verarbeitung eines Lebensmittelprodukts als ein Werkstück (5) angebracht ist;
eine Abbildungsvorrichtung (8) zum Aufnehmen eines Bilds des Werkstücks (5), wobei der Roboterarm (30) dazu konfiguriert ist, das Werkstück (5) durch das Werkzeug (40) auf der Basis von Ergebnissen einer Bildanalyse des aufgenommenen Bilds des Werkstücks (5) zu verarbeiten; und
eine Werkzeugprüfvorrichtung (50) zum Prüfen des Werkzeugs (40), das an dem Roboterarm (30) angebracht ist, wobei die Werkzeugprüfvorrichtung (50) umfasst:

eine Bildsteuereinheit (53) zum Steuern der Abbildungsvorrichtung (8), um ein Bild des Werkzeugs (40), das an dem Roboterarm (30) angebracht ist, aufzunehmen;
eine Bildverarbeitungseinheit (55), die dazu konfiguriert ist, eine Bildverarbeitung, die mit einer Werkzeugbedingung in Bezug auf einen Werkzeugtyp oder Werkzeugzustand assoziiert ist, die von dem Werkzeug (40) erfüllt werden muss, an dem aufgenommenen Bild des Werkzeugs (40), das an dem Roboterarm (30) angebracht ist, durchzuführen und ein verarbeitetes Bild zu erzeugen, in dem eine verwandte Region, die mit der Werkzeugbedingung assoziiert ist, extrahiert ist; und

eine Bestimmungseinheit (59), die dazu konfiguriert ist, auf der Basis des verarbeiteten Bilds zu bestimmen, ob das Werkzeug (40), das an dem Roboterarm (30) angebracht ist, die Werkzeugbedingung erfüllt.

2. Werkstückverarbeitungssystem (1) nach Anspruch 1, ferner umfassend eine Helligkeitswertserfassungseinheit (56), die dazu konfiguriert ist, einen Helligkeitswert des verarbeiteten Bilds zu erfassen, wobei die Bestimmungseinheit (59) dazu konfiguriert ist, auf der Basis des erfassten Helligkeitswerts zu bestimmen, ob die Werkzeugbedingung erfüllt ist.

3. Werkstückverarbeitungssystem (1) nach Anspruch 2,

wobei die Helligkeitswerterfassungseinheit (56) dazu konfiguriert ist, eine Summe von Helligkeitswerten des verarbeiteten Bilds zu erfassen, und

wobei die Bestimmungseinheit (59) dazu konfiguriert ist, auf der Basis der Summe von erfassten Helligkeitswerten zu bestimmen, ob die Werkzeugbedingung erfüllt ist.

4. Werkstückverarbeitungssystem (1) nach Anspruch 2,

wobei die Helligkeitswerterfassungseinheit (56) dazu konfiguriert ist, eine Summe $X_1$ von Differenzen zwischen identifizierten Helligkeitswerten durch die folgende Gleichung (1) unter Verwendung von $B_{ij}$, der ein Helligkeitswert jedes Pixels des verarbeiteten Bilds ist, wobei i eine beliebige natürliche Zahl gleich oder weniger als die Anzahl von Pixel in einer horizontalen Richtung des verarbeiteten Bilds ist und j eine beliebige natürliche Zahl gleich oder weniger als die Anzahl von Pixeln in einer vertikalen Richtung des verarbeiteten Bilds ist, und $B_{Sij}$, der ein Helligkeitswert ist, der für jedes Pixel gemäß der Werkzeugbedingung eingestellt ist, zu erfassen, und wobei die Bestimmungseinheit (59) dazu konfiguriert ist, auf der Basis der Summe $X_1$ von Differenzen zwischen erfassten Helligkeitswerten zu bestimmen, ob die Werkzeugbedingung erfüllt ist

$$X_1 = \sum_{i=0}^{M} \sum_{j=0}^{N} |B_{ij} - B_{Sij}| \qquad \dots \text{Gl. (1).}$$

5. Werkstückverarbeitungssystem (1) nach Anspruch 1, ferner umfassend:

eine Speichereinheit (54), die ein trainiertes Modell (57) speichert und die dazu konfiguriert ist, Beurteilungsdaten in Bezug darauf, ob das Werkzeug (40) die Werkzeugbedingung erfüllt, als Reaktion auf eine Eingabe von Daten in Bezug auf das verarbeitete Bild auszugeben; und

eine Beurteilungsdatenerfassungseinheit (58), die dazu konfiguriert ist, die Beurteilungsdatenausgabe von dem trainierten Modell (57), in das das verarbeitete Bild, das von der Bildverarbeitungseinheit (55) erzeugt wurde, eingegeben wurde, zu erfassen,

wobei die Bestimmungseinheit (59) dazu konfiguriert ist, auf der Basis der erfassten Beurteilungsdaten zu bestimmen, ob die Werkzeugbedingung erfüllt ist.

6. Werkstückverarbeitungssystem (1) nach Anspruch 1,

wobei die Bildverarbeitungseinheit (55) dazu konfiguriert ist, die Bildverarbeitung, die mit der Werkzeugbedingung des Werkzeugs assoziiert ist, an dem aufgenommenen Bild des Werkzeugs mit einer Außenfläche mit einer Markierung (45) durchzuführen,

wobei die Werkzeugprüfvorrichtung (50) ferner eine Identifikationsverarbeitungseinheit (64) umfasst, die dazu konfiguriert ist, einen Vorgang eines Identifizierens der Markierung (45) auf dem erzeugten verarbeiteten Bild auszuführen, und

wobei die Bestimmungseinheit (59) dazu konfiguriert ist, auf der Basis eines Ergebnisses des Vorgangs durch die Identifikationsverarbeitungseinheit zu bestimmen, ob die Werkzeugbedingung erfüllt ist.

7. Werkstückverarbeitungssystem (1) nach Anspruch 6, wobei die Identifikationsverarbeitungseinheit (64) dazu konfiguriert ist, einen Vorgang eines Identifizierens eines Zeichens als die Markierung auf dem verarbeiteten Bild auszuführen.

8. Werkstückverarbeitungssystem (1) nach einem der Ansprüche 1 bis 7, ferner umfassend eine Bedingungserfassungseinheit (51), die dazu konfiguriert ist, die Werkzeugbedingung gemäß einem Arbeitsplan des Roboterarms (30) zu erfassen, nachdem die Bestimmungseinheit (59) bestimmt hat, dass die Werkzeugbedingung erfüllt ist,

wobei die Bildverarbeitungseinheit (55) dazu konfiguriert ist, die Bildverarbeitung, die mit der Werkzeugbedingung, die von der Bedingungserfassungseinheit (51) erfasst wird, von einer Vielzahl der Werkzeugbedingungen, die im Voraus vorbereitet werden, assoziiert ist, an dem aufgenommenen Bild des Werkzeugs durchzuführen, und

wobei die Bestimmungseinheit (59) dazu konfiguriert ist, zu bestimmen, ob die Werkzeugbedingung, die von der Bedingungserfassungseinheit (51) erfasst wird, erfüllt ist.

9. Werkstückverarbeitungssystem (1) nach einem der Ansprüche 1 bis 8,
wobei die Bildverarbeitungseinheit (55) dazu konfiguriert ist, eine Maskierung auf das aufgenommene Bild des Werkzeugs unter Verwendung eines Referenzbilds, das mit der Werkzeugbedingung assoziiert ist, anzuwenden und ein Bild, in dem die verwandte Region, die mit der Werkzeugbedingung assoziiert ist, extrahiert ist, als das verarbeitete Bild zu erzeugen.

10. Verfahren zur Verarbeitung eines Werkstücks mit dem Werkstückverarbeitungssystem (1) nach einem der Ansprüche 1 bis 9, wobei das Verfahren umfasst:

einen Bildsteuerschritt (S17) eines Steuerns der Abbildungsvorrichtung, um ein Bild des Werkzeugs, das an dem Roboterarm angebracht ist, aufzunehmen;
einen Bildverarbeitungsschritt (S19) eines Durchführens einer Bildverarbeitung, die mit einer Werkzeugbedingung in Bezug auf einen Werkzeugtyp oder Werkzeugzustand assoziiert ist, die von dem Werkzeug erfüllt werden muss, an dem aufgenommenen Bild des Werkzeugs, das an dem Roboterarm angebracht ist, und eines Erzeugens eines verarbeiteten Bilds, in dem eine verwandte Region, die mit der Werkzeugbedingung assoziiert ist, extrahiert ist;
einen Bestimmungsschritt (S23) eines Bestimmens, ob das Werkzeug, das an dem Roboterarm angebracht ist, die Werkzeugbedingung erfüllt, auf der Basis des verarbeiteten Bilds; und
einen Werkstückverarbeitungsschritt (S35) eines Verarbeitens des Werkstücks durch das Werkzeug auf der Basis von Ergebnissen der Bildanalyse des aufgenommenen Bilds des Werkstücks.

**Revendications**

1. Système de traitement de pièces de travail (1) comprenant :

un bras robotisé (30) auquel est fixé un outil (40) destiné à traiter un produit alimentaire en tant que pièce de travail (5) ;
un dispositif d'imagerie (8) pour capturer une image de la pièce de travail (5), le bras robotisé (30) étant configuré pour traiter la pièce de travail (5) par l'outil (40) sur la base de résultats d'analyse de l'image capturée de la pièce de travail (5) ; et
un dispositif de contrôle d'outil (50) pour contrôler l'outil (40) fixé au bras robotisé (30), le dispositif de contrôle d'outil (50) comprenant :

une unité de commande d'image (53) pour commander le dispositif d'imagerie (8) de manière à capturer une image de l'outil (40) fixé au bras robotisé (30) ;
une unité de traitement d'image (55) configurée pour effectuer, sur l'image capturée de l'outil (40) fixé au bras robotisé (30), un traitement d'image associé à une condition d'outil concernant un type d'outil ou un état d'outil qui doit être satisfaite par l'outil (40), et générer une image traitée dans laquelle une zone associée à la condition d'outil est extraite ; et
une unité de détermination (59) configurée pour déterminer si l'outil (40) fixé au bras robotisé (30) satisfait à la condition d'outil, sur la base de l'image traitée.

2. Système de traitement de pièces de travail (1) selon la revendication 1, comprenant en outre une unité d'acquisition de valeur de luminosité (56) configurée pour acquérir une valeur de luminosité de l'image traitée,
dans lequel l'unité de détermination (59) est configurée pour déterminer si la condition d'outil est satisfaite sur la base de la valeur de luminosité acquise.

3. Système de traitement de pièces de travail (1) selon la revendication 2,

dans lequel l'unité d'acquisition de valeur de luminosité (56) est configurée pour acquérir une somme de valeurs de luminosité de l'image traitée, et
dans lequel l'unité de détermination (59) est configurée pour déterminer si la condition d'outil est satisfaite sur la base de la somme des valeurs de luminosité acquise.

4. Système de traitement de pièces de travail (1) selon la revendication 2,

dans lequel l'unité d'acquisition de valeur de luminosité (56) est configurée pour acquérir une somme $X_1$ de différences entre des valeurs de luminosité identifiées par l'équation suivante (1) en utilisant $B_{ij}$ qui est une valeur de luminosité de chaque pixel de l'image traitée, où i est un nombre entier naturel égal ou inférieur au nombre de pixels dans une direction horizontale de l'image traitée et j est un nombre entier naturel égal ou inférieur au nombre de pixels dans une direction verticale de l'image traitée, et $B_{sij}$ qui est une valeur de luminosité définie pour chaque pixel en fonction de la condition d'outil, et
dans lequel l'unité de détermination (59) est configurée pour déterminer si la condition d'outil est satisfaite sur la base de la somme $X_1$ des différences entre les valeurs de luminosité acquises.

$$X_1 = \sum_{i=0}^{M} \sum_{j=0}^{N} \left| B_{ij} - Bs_{ij} \right| \qquad \cdots \text{ Eq. (1)}$$

5. Système de traitement de pièces de travail (1) selon la revendication 1, comprenant en outre :

une unité de stockage (54) stockant un modèle entraîné (57) configuré pour fournir en sortie des données d'évaluation indiquant si l'outil (40) satisfait à la condition d'outil en réponse à l'entrée de données concernant l'image traitée ; et
une unité d'acquisition de données d'évaluation (58) configurée pour acquérir les données d'évaluation produites par le modèle entraîné (57) dans lequel l'image traitée générée par l'unité de traitement d'images (55) a été entrée ,
dans lequel l'unité de détermination (59) est configurée pour déterminer si la condition d'outil est satisfaite sur la base des données d'évaluation acquises.

6. Système de traitement de pièces de travail (1) selon la revendication 1,

dans lequel l'unité de traitement d'images (55) est configurée pour effectuer, sur l'image capturée de l'outil, le traitement d'images associé à la condition d'outil ayant une surface extérieure avec une marque (45),
dans lequel le dispositif de contrôle d'outil (50) comprend en outre une unité de traitement d'identification (64) configurée pour exécuter un processus d'identification de la marque (45) sur l'image traitée générée, et
dans lequel l'unité de détermination (59) est configurée pour déterminer si la condition d'outil est satisfaite sur la base d'un résultat du processus effectué par l'unité de traitement d'identification.

7. Système de traitement de pièces de travail (1) selon la revendication 6,
dans lequel l'unité de traitement d'identification (64) est configurée pour exécuter un processus d'identification d'un caractère en tant que marque sur l'image traitée.

8. Système de traitement de pièces de travail (1) selon l'une quelconque des revendications 1 à 7, comprenant en outre une unité d'acquisition de condition (51) configurée pour acquérir la condition d'outil selon un programme de travail du bras robotisé (30) après que l'unité de détermination (59) a déterminé que la condition d'outil est satisfaite,

l'unité de traitement d'images (55) est configurée pour effectuer, sur l'image capturée de l'outil, le traitement d'images associé à la condition d'outil acquise par l'unité d'acquisition de condition (51) parmi une pluralité de conditions d'outil préparées à l'avance, et
dans lequel l'unité de détermination (59) est configurée pour déterminer si la condition d'outil acquise par l'unité d'acquisition de condition (51) est satisfaite.

9. Système de traitement de pièces de travail (1) selon l'une quelconque des revendications 1 à 8,
dans lequel l'unité de traitement d'images (55) est configurée pour appliquer un masquage à l'image capturée de l'outil en utilisant une image de référence associée à la condition d'outil, et pour générer une image dans laquelle la zone associée à la condition d'outil est extraite en tant qu'image traitée.

10. Procédé de traitement d'une pièce de travail avec le système de traitement de pièces de travail (1) selon l'une quelconque des revendications 1 à 9, le procédé comprenant :

une étape de commande d'image (S17) consistant à commander le dispositif d'imagerie de manière à capturer une image de l'outil fixé au bras robotisé ;
une étape de traitement d'image (S19) consistant à effectuer, sur l'image capturée de l'outil fixé au bras robotisé, un traitement d'image associé à une condition d'outil concernant un type d'outil ou un état d'outil qui doit être satisfaite par l'outil, et à générer une image traitée dans laquelle une zone associée à la condition d'outil est extraite ;
une étape de détermination (S23) consistant à déterminer si l'outil fixé au bras robotisé satisfait à la condition d'outil, sur la base de l'image traitée ; et
une étape de traitement de la pièce de travail (S35) consistant à traiter la pièce de travail par l'outil sur la base de résultats de l'analyse d'image de l'image capturée de la pièce de travail.

# FIG. 1

1a(1)

41  15

8

4

50a(50)

TOOL CHECKING DEVICE  51

CONDITION
ACQUISITION UNIT

52

TOOL MOVEMENT
CONTROL UNIT

53

IMAGING
CONTROL UNIT

55a(55)

IMAGE
PROCESSING UNIT

56

BRIGHTNESS VALUE
ACQUISITION UNIT

59a,59b(59)

DETERMINATION UNIT

30c(30)

40

42R(42)

43R(43)

43L(43)

30b(30)

42L(42)

30a(30)

41

5

7

# FIG. 2

96

| TOOL TYPE / TOOL STATE | CLAMPER | CHUCK (LEFT) | CHUCK (RIGHT) | KNIFE (LEFT) | KNIFE (RIGHT) |
|---|---|---|---|---|---|
| STATE 1 | OPEN STATE 14a(14) | OPEN STATE 14c(14) | OPEN STATE 14e(14) | NORMAL STATE 14g(14) | NORMAL STATE 14h(14) |
| STATE 2 | CLOSED STATE 14b(14) | CLOSED STATE 14d(14) | CLOSED STATE 14f(14) | | |

EP 4 249 187 B1

# FIG. 3A

14a(14)

55a(55)
IMAGE
PROCESSING UNIT

56a(56)
BRIGHTNESS VALUE
ACQUISITION UNIT

59a(59)
DETERMINATION
UNIT

CHECK A          15

18a(18)

BRIGHTNESS
VALUE SUM
$\Sigma\ \Sigma\ |\ B\ |$

$X_2 > T_2$

5    7    41(40)    30a(30)

17a(17)    41

CHECK B          15

18a(18)

BRIGHTNESS
VALUE SUM
$\Sigma\ \Sigma\ |\ B\ |$

$X_2 \leqq T_2$

5    7    41(40)  30a(30)

5    17a(17)    41

# FIG. 3B

ADVANCE
PREPARATION

7

17a(17)
12

41(40)

15    41(40) 30a(30)

14a(14)

55a(55)

56b(56)

59b(59)

IMAGE
PROCESSING UNIT

BRIGHTNESS VALUE
ACQUISITION UNIT

DETERMINATION
UNIT

CHECK A    15    7

18a(18)

BRIGHTNESS
VALUE SUM
$\Sigma \ \Sigma \ | \ B-Bs \ |$

$X_1 < T_1$

5    41(40)  30a(30)

41
17a(17)

CHECK B    15    7

18a(18)

BRIGHTNESS
VALUE SUM
$\Sigma \ \Sigma \ | \ B-Bs \ |$

$X_1 \geqq T_1$

5    41(40) 30a(30)

5    41
17a(17)

# FIG. 4

1a(1)

90

**PROCESSING CONTROL UNIT**

92

**ROM**

91

**PROCESSOR**

6

**ACCEPTANCE BUTTON**

**PROCESSING CONTROL PROGRAM**

95

7

**CONVEYANCE DEVICE**

93

**RAM**

30

**ROBOT ARM**

94

**MEMORY**

8

**IMAGING DEVICE**

**REFERENCE IMAGE DATA**

96

9

**ALARM DEVICE**

# FIG. 5

```
                    ┌──────────────┐
                    │    START     │
                    └──────────────┘
                            │
                            ▼
            ┌───────────────────────────┐
            │    CONVERY WORKPIECE      │──╮ S11
            └───────────────────────────┘
                            │
                            ▼
            ┌───────────────────────────┐
            │   ACQUIRE TOOL CONDITION  │──╮ S13
            └───────────────────────────┘
                            │
                            ▼
            ┌───────────────────────────┐
            │        MOVE TOOL          │──╮ S15
            └───────────────────────────┘
                            │
                            ▼
            ┌───────────────────────────┐
            │      IMAGING CONTROL      │──╮ S17
            └───────────────────────────┘
                            │
                            ▼
            ┌───────────────────────────┐
            │      IMAGE PROCESSING     │──╮ S19
            └───────────────────────────┘
                            │
                            ▼
            ┌───────────────────────────┐
            │  ACQUIRE BRIGHTNESS VALUE │──╮ S21
            └───────────────────────────┘
                            │
                            ▼
                      ╱ IS TOOL ╲          S23
                   ╱ CONDITION     ╲  No
                   ╲  SATISFIED?   ╱──────────────────────┐
                      ╲         ╱                         │
                          │ Yes                           │
                          ▼                               │
        No        ╱  IS TOOL  ╲   S27                      │
     ┌───────────╲ CHECK COMPLETE? ╱                      │
     │             ╲           ╱                           │
     │                 │ Yes                               │
     │                 ▼                                   ▼
     │     ┌───────────────────┐          ┌───────────────────┐
     │     │     MOVE TOOL     │─╮ S29     │    ISSUE ALARM    │─╮ S25
     │     └───────────────────┘          └───────────────────┘
     │                 │                               │
     │                 ▼                               │
     │     ┌───────────────────┐                       │
     │     │  IMAGING CONTROL  │─╮ S31                  │
     │     └───────────────────┘                       │
     │                 │                               │
     │                 ▼                               │
     │     ┌───────────────────┐                       │
     │     │   ANALYZE IMAGE   │─╮ S33                  │
     │     └───────────────────┘                       │
     │                 │                               │
     │                 ▼                               │
     │     ┌───────────────────┐                       │
     │     │ PROCESS WORKPIECE │─╮ S35                  │
     │     └───────────────────┘                       │
     │                 │◄──────────────────────────────┘
     │                 ▼
     │           ┌──────────┐
     │           │   END    │
     │           └──────────┘
```

# FIG. 6

1b(1)

50b(50)

**TOOL CHECKING DEVICE**

CONDITION ACQUISITION UNIT — 51

TOOL MOVEMENT CONTROL UNIT — 52

IMAGING CONTROL UNIT — 53

IMAGE PROCESSING UNIT — 55a(55)

EVALUATION DATA ACQUISITION UNIT — 58

DETERMINATION UNIT — 59c(59)

STORAGE UNIT — 54

TRAINED MODEL — 57

# FIG. 7

| TOOL TYPE / TOOL STATE | CLAMPER | CHUCK (LEFT) | CHUCK (RIGHT) | KNIFE (LEFT) | KNIFE (RIGHT) |
|---|---|---|---|---|---|
| STATE 1 | OPEN STATE 57a(57) TRAINED MODEL | OPEN STATE 57c(57) TRAINED MODEL | OPEN STATE 57e(57) TRAINED MODEL | NORMAL STATE 57g(57) TRAINED MODEL | NORMAL STATE 57h(57) TRAINED MODEL |
| STATE 2 | CLOSED STATE 57b(57) TRAINED MODEL | CLOSED STATE 57d(57) TRAINED MODEL | CLOSED STATE 57f(57) TRAINED MODEL | | |

# FIG. 8

# FIG. 9

CHECK A

CHECK B

IMAGE PROCESSING UNIT

EVALUATION DATA ACQUISITION UNIT

DETERMINATION UNIT

TRAINED MODEL

$X_3 < T_3$

$X_3 \geqq T_3$

# FIG. 10

# FIG. 11

21a((21)

| RELATED AREA DATA FOR TYPE CHECK | | | | | |
|---|---|---|---|---|---|
| TOOL TYPE | CLAMPER | CHUCK (LEFT) | CHUCK (RIGHT) | KNIFE (LEFT) | KNIFE (RIGHT) |
| RELATED AREA DATA | DATA A1 | DATA B1 | DATA C1 | DATA D1 | DATA E1 |

21b((21)

| RELATED AREA DATA FOR STATE CHECK | | | |
|---|---|---|---|
| TOOL TYPE | CLAMPER | CHUCK (LEFT) | CHUCK (RIGHT) |
| RELATED AREA DATA | DATA A2 | DATA B2 | DATA C2 |

CLAMPER OPEN STATE

44 45

41a

A

47 17b 46
45

CLAMPER CLOSED STATE 17b

45

A

41a

17b 44

# FIG. 12

55b(55)　　　　58　　　　59d(59)

IMAGE
PROCESSING UNIT

IDENTIFICATION
PROCESSING UNIT

DETERMINATION
UNIT

CHECK A　　15
17b

17b(18b)

TOOL TYPE :　[A]
TOOL STATE :

17b(18b)

TOOL TYPE : A
TOOL STATE : A

TOOL
CONDITION
IS SATISFIED

7　5　17b　45
47

CHECK B　　15
17b

17b(18b)

TOOL TYPE :　[A]
TOOL STATE :

17b(18b)

TOOL TYPE : A
TOOL STATE : NONE

TOOL
CONDITION IS
NOT SATISFIED

7　5　17b　47　45

**EP 4 249 187 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018158405 A
- US 20160334777 A1
- US 20200117161 A1
- US 20090271036 A1
- JP H05318239 A